# EUROPÄISCHE PATENTSCHRIFT

(11) **EP 2 716 830 B1**
(45) Veröffentlichungstag und Bekanntmachung des Hinweises auf die Patenterteilung: **15.08.2018**
(21) Anmeldenummer: 12006858.0
(22) Anmeldetag: 02.10.2012
(51) Int. Cl.: E04B 9/34, E04B 9/04, E04B 7/10

(54) **LEICHTBAUSTRUKTUR**
LIGHTWEIGHT CONSTRUCTION STRUCTURE
STRUCTURE DE CONSTRUCTION LÉGÈRE

(43) Veröffentlichungstag der Anmeldung: 09.04.2014
(73) Patentinhaber: FESTO AG & Co. KG, 73734 Esslingen (DE)
(72) Erfinder: Thallemer, Axel, 80796 München (DE); Danzer, Martin, 81929 München (DE); Grabner, Martin, 4060 Leonding (AT)
(74) Vertreter: Patentanwälte Magenbauer & Kollegen Partnerschaft mbB

(56) Entgegenhaltungen:
- WO-A-03/002827
- AT-A4- 506 697
- DE-A1-102004 061 485
- DE-U1- 29 619 420
- US-A- 3 525 663
- US-A1- 2012 220 185
- US-B1- 6 418 673

## Beschreibung

Die Erfindung betrifft eine Leichtbaustruktur, mit wenigstens einer Struktureinheit, die aus mehreren Schalenelementen aufgebaut ist, wobei die Schalenelemente jeweils wenigstens zwei ineinander übergehende Schalenabschnitte aufweisen, die jeweils definiert sind durch eine in einer X-Y-Ebene eines X, Y, Z-Koordinatensystems verlaufende Berandungskurve und eine an der Berandungskurve entlang gleitenden, sich in einer mit der Z-Achse des Koordinatensystems zusammenfallenden Ebene erstreckenden Konturkurve, wobei sich die Kurvenverläufe der beiden Berandungskurven und der beiden Konturkurven voneinander unterscheiden.

Leichtbaustrukturen sind bereits seit langem bekannt. Der Hauptgrund für den Einsatz von Leichtbaustrukturen ist die Gewichtsreduktion. Daher finden Leichtbaustrukturen beispielsweise Anwendung im Flugzeugbau, in der Automobilindustrie und in der Bauindustrie, insbesondere beim Bau von Gebäuden.

Leichtbaustrukturen, die für technische Bauteile oder zum Bau von Gebäuden verwendet werden, müssen die Anforderung erfüllen, dass die Gewichtsreduktion nicht zu Lasten der Stabilität des gesamten Systems gehen darf. Insbesondere ist es wichtig, dass die Leichtbaustruktur unterschiedliche Arten von Beanspruchungen aufnehmen und ableiten kann. Hierzu zählen insbesondere Zug- und Druckkräfte, Scherkräfte sowie Torsionskräfte. Das Dokument DE 10 2004 061 485 A1 offenbart doppelt gekrümmte Schalen für den Hochbau. Die Schalen können unterschiedliche Ausgestaltungen haben, beispielsweise eine gekrümmte Schale in Form eines ausgerundeten Tunnel-Systems. Aufgabe der Erfindung ist es, eine Leichtbaustruktur zu schaffen, die in der Lage ist, im Lastfall unterschiedliche Beanspruchungen aufzunehmen und optimal abzuleiten, ohne dass es zu einer schädlichen Beanspruchung der Leichtbaustruktur oder des mit der Leichtbaustruktur ausgestatteten Bauteils kommt.

Diese Aufgabe wird durch eine Leichtbaustruktur mit den Merkmalen des unabhängigen Anspruchs 1 gelöst. Weiterbildungen der Erfindung sind in den Unteransprüchen dargestellt.

Die erfindungsgemäße Leichtbaustruktur zeichnet sich dadurch aus, dass die Berandungs- und Konturkurven derart ausgebildet sind, dass die beiden Schalenabschnitte mit stetigem Verlauf ineinander übergehen.

Ein wichtiger Aspekt der Erfindung ist also, dass die einander zugeordneten Schalenabschnitte eines jeweiligen Schalenelements keinen sprungartigen Übergang aufweisen. Solche sprungartigen Übergänge führen im Lastfall zu Spannungsspitzen, die im schlimmsten Fall zum Bauteilversagen führen können. Die Schalenelemente sind also kraftflussoptimiert, so dass die zuvor bereits erwähnten Zug- und Druckkräfte, Scherkräfte und Torsionskräfte optimal abgeleitet werden können. Bei einer Weiterbildung der Erfindung gehen die beiden Schalenabschnitte eines jeweiligen Schalenelementes positionsstetig, tangentenstetig oder krümmungsstetig ineinander über. Bei der Positionsstetigkeit, die auch als C0-Stetigkeit bezeichnet wird, sind die beiden Schalenabschnitte eines jeweiligen Schalenelements diskret scharf miteinander verbunden. Unscharfe Übergänge, beispielsweise für den Fall, dass die beiden gekrümmten Schalenabschnitte nicht direkt miteinander verbunden sind, sondern über ein beispielsweise ungekrümmtes Übergangsstück miteinander in Verbindung stehen, sind bei einem solchen positionsstetigen Übergang nicht vorhanden. Bei der Tangentenstetigkeit, die auch als C1-Stetigkeit bezeichnet wird, ist der Übergang zwischen den beiden Schalenabschnitten eines jeweiligen Schalenelements ausgerundet. Der tangentenstetige Übergang zwischen den Schalenabschnitten ist gegenüber dem positionsstetigen Übergang kerbspannungsoptimiert, da hier keine Kerben ausgebildet sind. Eine weitere Optimierung des Übergangs zwischen den Schalenabschnitten eines jeweiligen Schalenelementes lässt sich durch einen krümmungsstetigen Übergang, der auch als C2-Stetigkeit bezeichnet wird, erzielen. In diesem Fall gehen die Schalenabschnitte fließend ineinander über.

Es ist möglich, dass die Berandungs- und/oder Konturkurven als Ziehkurven ausgebildet sind.

Bei der Erfindung sind die Schalenelemente in der X-Y-Ebene flächenadditiv zu einer flächenförmigen Struktureinheit verbunden. Zweckmäßig sind rotationssymmetrische flächenförmige Struktureinheiten, da diese insbesondere Torsionskräfte optimal ableiten. Es sind beispielsweise Seesternen nachgebildete flächenförmige Struktureinheiten, regelmäßige Polygone oder dergleichen denkbar.

Es ist möglich, dass die Schalenelemente zusätzlich zur X-Y-Ebene raumadditiv entlang der Z-Achse zu einer räumlichen Struktureinheit verbunden sind. Auch hier eignen sich wiederum besonders Rotationskörper wegen der optimierten Kraftableitung insbesondere von Torsionskräften. Die Schalenelemente innerhalb einer solchen räumlichen Struktureinheit sind in bevorzugter Weise als hexagonal dichte Packung angeordnet.

Bei der Erfindung sind die Schalenelemente innerhalb der Struktureinheiten zum Beispiel wie Skalare ausgebildet. Die Schalenelemente können also eine durch mathematische Abbildungsmethoden erzeugte mathematische Ähnlichkeit aufweisen.

In besonders bevorzugter Weise weist die Struktureinheit ein Zentrum mit mehreren um das Zentrum herum angeordnete Senktorabschnitten auf, die sich jeweils aus mehreren dieser Schalenelemente zusammensetzen. Es ist also möglich, dass sich die gruppierten Schalenelemente ausgehend vom Zentrum auffächern.

Es ist ferner möglich, dass die Struktureinheit mehrere um das Zentrum herum verlaufende konzentrisch ineinander angeordnete Ringabschnitte aufweist, die jeweils aus mehreren Schalenelementen bestehen.

Bei einer Weiterbildung der Erfindung ist innerhalb eines jeweiligen Schalenelementes die Kurvenlänge der Berandungskurve des näher zum Zentrum angeordneten Schalenabschnitts kürzer als die Kurvenlänge der radial außen liegenden Berandungskurve des anderen Schalenabschnitts.

Es ist möglich, dass die Schalenelemente jeweils aus vier Schalenabschnitten aufgebaut sind, von denen jeweils zwei mit jeweils voneinander verschiedenen Berandungskurven und Konturkurven ausgestattete Schalenabschnitte eine Schalenhälfte bilden und die Schalenhälften eines Schalenelements spiegelsymmetrisch zueinander angeordnet sind. In diesem Fall ist also die kleinste Untergruppe aus zwei miteinander verbundenen Schalenabschnitten gespiegelt.

Bei einer Weiterbildung der Erfindung weisen die Schalenelemente jeweils eine unkonstante oder konstante - lastfallabhängige - Wandstärke auf. Beispielsweise wäre es möglich, die Wandstärken der Schalenelemente in Abhängigkeit des Belastungsfalls zu optimieren. Beispielsweise könnten die Wandstärken der Schalenelemente dort größer sein, wo im Belastungsfall größere Zug-, Druck- oder Scherkräfte auftreten.

In besonders bevorzugter Weise weisen die Schalenelemente jeweils eine insbesondere zentrische Durchbrechung auf. Dadurch wird zum einen weiteres Gewicht eingespart und zum andern können externe Komponenten durch die Struktureinheit hindurchgeführt werden.

In besonders bevorzugter Weise sind mehrere Struktureinheiten zu einem Struktureinheit-Cluster verbunden.

Es ist möglich, dass der Struktureinheit-Cluster wenigstens eine flächige Deckfläche mit Lochmuster aufweist. Ein solches Struktureinheit-Cluster könnte beispielsweise als Decke oder Wand in einem Gebäude eingesetzt werden, wobei das Lochmuster der Deckfläche in Kombination mit den Durchbrechungen der Schalenelemente für Luftauslässe oder zur Durchführung von Medienleitungen oder Leitungen der Energieversorgung genutzt werden kann.

Die Erfindung betrifft ferner noch die Verwendung einer Leichtbaustruktur gemäß einem der Ansprüche 1 bis 13 als Tragwerkstruktur in einem Flächen- oder Raumtragwerk.

Mit derartigen Tragwerkstrukturen lassen sich beispielsweise Gebäude, insbesondere Hochhäuser bauen, die ein viel geringeres Gesamtgewicht gegenüber herkömmlich gebauten Häusern besitzen. Das vorstehend erwähnte Struktureinheit-Cluster mit wenigstens einer flächigen Deckfläche eignet sich hier insbesondere als Deckenelement einer Gebäudedecke.

Ein bevorzugtes Ausführungsbeispiel der Erfindung ist in der Zeichnung dargestellt und wird im Folgenden näher erläutert. In der Zeichnung zeigen:
- Figur 1: eine perspektivische Darstellung eines bevorzugten Ausführungsbeispiels der erfindungsgemäßen Leichtbaustruktur und
- Figur 2: eine perspektivische Darstellung der Leichtbaustruktur aus Figur 1 in Unteransicht.

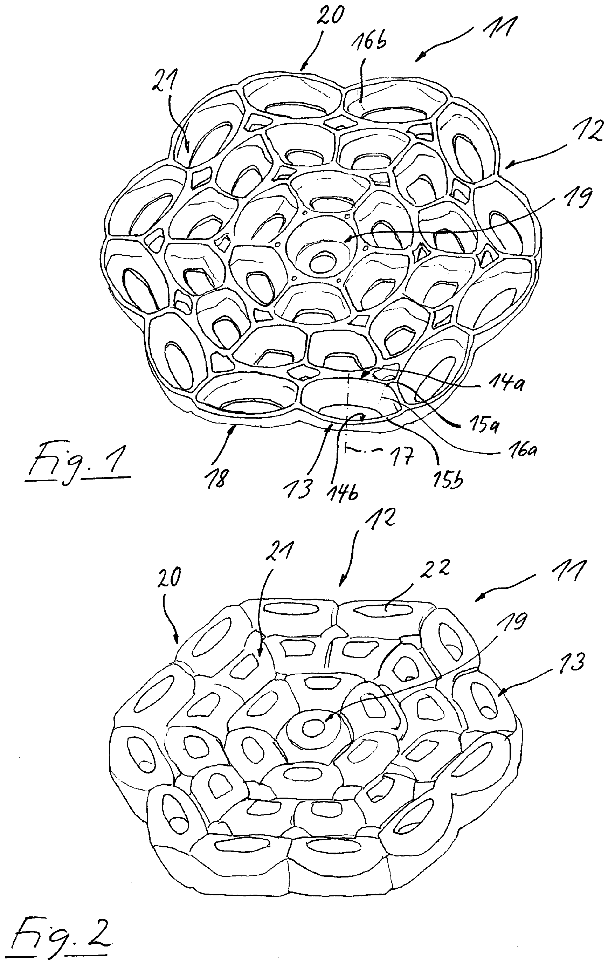

Die Figuren 1 und 2 zeigen ein bevorzugtes Ausführungsbeispiel der erfindungsgemäßen Leichtbaustruktur 11. Die Leichtbaustruktur 11 verfügt im Beispielsfall über eine Struktureinheit 12, die aus mehreren Schalenelementen 13 aufgebaut ist. Es ist selbstverständlich möglich, mehrere solcher in den Figuren 1 und 2 dargestellten Struktureinheiten 12 zu einem Struktureinheit-Cluster (nicht dargestellt) zu verbinden.

Die Schalenelemente besitzen jeweils wenigstens zwei ineinander übergehende Schalenabschnitte 14a, 14b, die jeweils definiert sind durch eine in einer X-Y-Ebene eines X, Y, Z-Koordinatensystems verlaufende Berandungskurve 15a, 15b und eine an der Berandungskurve 15a, 15b entlang gleitenden, sich in einer mit der Z-Achse des Koordinatensystems zusammenfallende Ebene erstreckenden Konturkurve 16. Die Kurvenverläufe der beiden Berandungskurven 15a, 15b und der beiden Konturkurven 16a, 16b sind voneinander verschieden.

Im dargestellten Beispielsfall des bevorzugten Ausführungsbeispiels bilden also die beiden Schalenabschnitte 14a, 14b die kleinste Untergruppe, die jedoch im Beispielsfall durch Spiegelung an einer Symmetrieachse 17 zu einer Voll-Schale 18 vervollständigt sind.

Ein wesentlicher Aspekt der Erfindung ist, dass die Berandungs- und Konturkurven 15a, 15b; 16a, 16b derart ausgebildet sind, dass die beiden Schalenabschnitte 14a, 14b mit stetigem Verlauf ineinander übergehen. Die Übergänge zwischen den Schalenabschnitten 14a, 14b eines Schalenelements 13 sind im Beispielsfall tangentenstetig oder krümmungsstetig ausgebildet. Dadurch werden Kerben an den Übergängen der Schalenabschnitte 14a, 14b vermieden, wodurch im Belastungsfall Kerbspannungen vermieden werden.

Die Figuren 1 und 2 zeigen ein Ausführungsbeispiel, bei dem die Schalenelemente 13 in der X-Y-Ebene flächenadditiv zu einer flächenförmigen Struktureinheit verbunden sind. Die Struktureinheit ist insgesamt ungeradzahlig oder geradzahlig sternförmig angeordnet ausgebildet. Die Struktureinheit 12 besitzt ein Zentrum 19 mit mehreren um das Zentrum herum angeordneten Sektorabschnitten 20, die sich jeweils aus mehreren dieser Schalenelemente 13 zusammensetzen. Ferner besitzt die Struktureinheit 12 mehrere um das Zentrum 19 herum verlaufende Ringabschnitte 21, deren Ringdurchmesser in Richtung nach radial außen zunimmt. Es sind also konzentrisch zueinander angeordnete Ringabschnitte 21 vorgesehen. Jeder dieser Ringabschnitte besteht wiederum aus mehreren Schalenelementen 13. Die Sektorenabschnitte 20 bestehen also jeweils aus Teilen der Ringabschnitte 21.

Bei einer derartigen strahlenförmigen Ausgestaltung der Struktureinheit 12 sind die Schalenelemente 13 charakteristisch geformt. Innerhalb eines jeweiligen Schalenelementes 13 ist die Kurvenlänge der Berandungskurve 15a, des näher zum Zentrum angeordneten Schalenabschnitts 14a kürzer als die Kurvenlänge der radial weiter außen liegenden Berandungskurve 15b des anderen Schalenabschnitts 14b.

Im dargestellten Beispielsfall besitzen die Schalenelemente 13 jeweils den Kurvenverläufen der Berandungs- und Konturkurven 15a, 15b; 16a, 15b folgende Wände, die jeweils eine Wandstärke aufweisen. Die Wandstärke eines Schalenelementes 13 kann konstant sein oder variieren. Es ist möglich, dass die Schalenelemente 13 eines Ringabschnitts 21 derart aneinandergesetzt sind, dass ein Teil der Wandung des einen Schalenelements 13 auch gleichzeitig ein Teil der Wandung des in Umfangsrichtung benachbarten Schalenelements 13 ist. In diesem Fall erstrecken sich die gemeinsamen Wandabschnitte in radialer Richtung.

Die Übergänge zwischen den Schalenabschnitten 14a, 14b benachbarter Schalenelemente 13 sind im dargestellten Beispielsfall für die mit der Z-Achse des Koordinatensystems zusammenfallenden Ebenen ebenfalls stetig. Die Stetigkeit wird also nicht nur innerhalb eines Schalenelements gewahrt, sondern auch beim Übergang vom einen zum anderen Schalenelement.

Die Figur 2 zeigt die Unterseite der flächenförmigen Struktureinheit 12. Die Unterseiten der Schalenelemente sind konvex gekrümmt. Die Übergänge zwischen den Schalenelementen 13 sind in radialer Richtung ebenfalls stetig, so dass auch Kerben und somit im Belastungsfall Kerbspannungen vermieden werden.

## Patentansprüche

1. Leichtbaustruktur, mit wenigstens einer Struktureinheit (12), die aus mehreren Schalenelementen (13) aufgebaut ist, wobei die Schalenelemente (13) jeweils wenigstens zwei ineinander übergehende Schalenabschnitte (14a, 14b) aufweisen, die jeweils definiert sind durch eine in einer X-Y-Ebene eines X, Y, Z-Koordinatensystems verlaufende Berandungskurve (15a, 15b) und eine an der Berandungskurve (15a, 15b) entlang gleitenden, sich in einer mit der Z-Achse des Koordinatensystems zusammenfallenden Ebene erstreckende Konturkurve (16a, 16b), wobei sich die Kurvenverläufe der beiden Berandungskurven (15a, 15b) und der beiden Konturkurven (16a, 16b) voneinander unterscheiden, wobei die Berandungs- und Konturkurven derart ausgebildet sind, dass die beiden Schalenabschnitte (14a, 14b) mit stetigem Verlauf ineinander übergehen, wobei die Schalenelemente (13) in der X-Y-Ebene flächenadditiv zu einer flächenförmigen Struktureinheit (12) verbunden sind, wobei die Schalenelemente (13) innerhalb der Struktureinheit (12) durch mathematische Abbildungsmethoden erzeugte mathematische Ähnlichkeiten aufweisen.

2. Leichtbaustruktur nach Anspruch 1, **dadurch gekennzeichnet, dass** die beiden Schalenabschnitte (14a, 14b) eines jeweiligen Schalenelementes (13) positionsstetig, tangentenstetig oder krümmungsstetig ineinander übergehen.

3. Leichtbaustruktur nach Anspruch 1 oder 2, **dadurch gekennzeichnet, dass** die Berandungs- und/oder Konturkurven (15a, 15b; 16a, 16b) als Ziehkurven ausgebildet sind.

4. Leichtbaustruktur nach einen der vorhergehenden Ansprüche, **dadurch gekennzeichnet, dass** die Schalenelemente (13) zusätzlich zur X-Y-Ebene raumadditiv entlang der Z-Achse zu einer räumlichen Struktureinheit (12) verbunden sind.

5. Leichtbaustruktur nach einem der vorhergehenden Ansprüche, **dadurch gekennzeichnet, dass** die Struktureinheit (12) ein Zentrum (19) mit mehreren um das Zentrum (19) herum angeordneten Sektorabschnitten (20) aufweist, die sich jeweils aus mehreren dieser Schalenelemente (13) zusammensetzen.

6. Leichtbaustruktur nach Anspruch 5, **dadurch gekennzeichnet, dass** innerhalb eines jeweiligen Schalenelementes die Kurvenlänge der Berandungskurve (15a, 15b) des näher zum Zentrum (19) angeordneten Schalenabschnitts (14a, 14b) kürzer ist als die Kurvenlänge der radial weiter außen liegenden Berandungskurve (15a, 15b) des anderen Schalenabschnitts (14a, 14b) .

7. Leichtbaustruktur nach einem der vorhergehenden Ansprüche, **dadurch gekennzeichnet, dass** die Schalenelemente (13) jeweils aus vier Schalenabschnitten (14a, 14b) aufgebaut sind, von denen jeweils zwei mit jeweils voneinander verschiedenen Berandungskurven (15a, 15b) und Konturkurven (16a, 16b) ausgestattete Schalenabschnitte (14a, 14b) eine Schalenhälfte bilden und die Schalenhälften eines jeweiligen Schalenelementes (13) spiegelsymmetrisch zueinander angeordnet sind.

8. Leichtbaustruktur nach einem der vorhergehenden Ansprüche, **dadurch gekennzeichnet, dass** die Schalenelemente (13) jeweils eine unkonstante oder konstante - lastfallabhängige - Wandstärke aufweisen.

9. Leichtbaustruktur nach einem der vorhergehenden Ansprüche, **dadurch gekennzeichnet, dass** die Schalenelemente (13) jeweils eine insbesondere zentrische Durchbrechung (22) aufweisen.

10. Leichtbaustruktur nach einem der vorhergehenden Ansprüche, **dadurch gekennzeichnet, dass** mehrere Struktureinheiten (12) zu einem Struktureinheit-Cluster verbunden sind.

11. Leichtbaustruktur nach Anspruch 10, **dadurch gekennzeichnet, dass** der Struktureinheit-Cluster wenigstens eine flächige Deckfläche mit Lochmuster aufweist.

12. Verwendung einer Leichtbaustruktur gemäß einem der Ansprüche 1 bis 13 als Tragwerkstruktur in einem Flächen- oder Raumtragwerk.

## Claims

1. Lightweight structure with at least one structural unit (12) which is built up of several shell elements (13), wherein each of the shell elements (13) has at least two shell sections (14a, 14b), merging into one another, each defined by a boundary curve (15a, 15b) running in an X-Y plane of an X, Y, Z-coordinate system, and a contour curve (16a, 16b) sliding along the boundary curve (15a, 15b) and extending in a plane coinciding with the Z-axis of the coordinate system, wherein the curve progressions of the two boundary curves (15a, 15b) and the two contour curves (16a, 16b) differ from one another, wherein the boundary and contour curves are so designed that the two shell sections (14a, 14b) merge into one another with a constant course, wherein the shell elements (13) are connected in the X-Y plane, in a planar-additive manner, into a planar structural unit (12), wherein the shell elements (13) have within the structural unit (12) mathematical similarities generated by mathematical mapping methods.

2. Lightweight structure according to claim 1, **characterised in that** the two shell sections (14a, 14b) of each shell element (13) merge into one another with a constant position, constant tangent or constant curvature.

3. Lightweight structure according to claim 1 or 2, **characterised in that** boundary and contour curves (15a, 15b; 16a, 16b) are in the form of tractrix curves.

4. Lightweight structure according to any of the preceding claims, **characterised in that** the shell elements (13) are connected by an added dimension along the Z-axis, in addition to the X-Y plane, to form a spatial structural unit (12).

5. Lightweight structure according to any of the preceding claims, **characterised in that** the structural unit (12) has a centre (19) with several sector sections (20), each comprised of several shell elements (13), arranged around the centre (19).

6. Lightweight structure according to claim 5 **characterised in that**, within each shell element, the curve length of the boundary curve (15a, 15b) of the shell section (14a, 14b) located nearer to the centre (19) is shorter than the curve length of the boundary curve (15a, 15b) of the other shell section (14a, 14b) lying radially further outwards.

7. Lightweight structure according to any of the preceding claims, **characterised in that** the shell elements (13) are each made up of four shell sections (14a, 14b), with in each case two shell sections (14a, 14b) provided with boundary curves (15a, 15b) and contour curves (16a, 16b) differing from one another form a half shell, and the half shells of each shell element (13) are arranged with mirror symmetry to one another.

8. Lightweight structure according to any of the preceding claims, **characterised in that** the shell elements (13) each have an inconstant or constant wall thickness - depending on loading condition.

9. Lightweight structure according to any of the preceding claims, **characterised in that** the shell elements (13) each have a through hole (22), in particular in the centre.

10. Lightweight structure according to any of the preceding claims, **characterised in that** several structural units (12) are joined to form a structural unit cluster.

11. Lightweight structure according to claim 10, **characterised in that** the structural unit cluster has at least one flat top surface with a hole pattern.

12. Use of a lightweight structure according to any of claims 1 to 13 as load-bearing structure in a plane or spatial load-bearing structure.

## Revendications

1. Structure de construction légère, avec au moins une unité de structure (12), qui est composée de plusieurs éléments cuvette (13), dans laquelle les éléments cuvette (13) présentent respectivement au moins deux sections cuvette (14a, 14b) se fondant l'une dans l'autre, qui sont définies respectivement par une courbe de bord (15a, 15b) s'étendant dans un plan X-Y d'un système de coordonnées X, Y, Z et une courbe de contour (16a, 16b) glissant le long de la courbe de bord (15a, 15b), s'étendant dans un plan coïncidant avec l'axe Z du système de coordonnées, dans laquelle les tracés de courbe des deux courbes de bord (15a, 15b) et des deux courbes de contour (16a, 16b) se distinguent l'un de l'autre, dans laquelle les courbes de bord et de contour sont réalisées de telle sorte que les deux sections cuvette (14a, 14b) se fondent l'une dans l'autre avec tracé constant, dans laquelle les éléments cuvette (13) sont reliés dans le plan X-Y par addition de surfaces en une unité de structure (12) planiforme, dans laquelle les éléments cuvette (13) présentent des similitudes mathématiques générées par des méthodes de représentation mathématiques à l'intérieur de l'unité de structure (12).

2. Structure de construction légère selon la revendication 1, **caractérisée en ce que** les deux sections cuvette (14a, 14b) d'un élément cuvette (13) concerné se fondent l'une dans l'autre de manière constante en position, constante en tangente ou constante en courbure.

3. Structure de construction légère selon la revendication 1 ou 2, **caractérisée en ce que** les courbes de bord et/ou de contour (15a, 15b ; 16a, 16b) sont réalisées en tant que tractrices.

4. Structure de construction légère selon l'une quelconque des revendications précédentes, **caractérisée en ce que** les éléments cuvette (13) sont reliés en plus du plan X-Y par addition d'espaces le long de l'axe Z en une unité de structure (12) spatiale.

5. Structure de construction légère selon l'une quelconque des revendications précédentes, **caractérisée en ce que** l'unité de structure (12) présente un centre (19) avec plusieurs sections de secteur (20) agencées autour du centre (19), qui se composent respectivement de plusieurs de ces éléments cuvette (13).

6. Structure de construction légère selon la revendication 5, **caractérisée en ce qu'**à l'intérieur d'un élément cuvette concerné, la longueur de courbe de la courbe de bord (15a, 15b) de la section cuvette (14a, 14b) agencée plus près du centre (19) est inférieure à la longueur de courbe de la courbe de bord (15a, 15b) de l'autre section cuvette (14a, 14b) située radialement plus à l'extérieur.

7. Structure de construction légère selon l'une quelconque des revendications précédentes, **caractérisée en ce que** les éléments cuvette (13) sont composés respectivement de quatre sections cuvette (14a, 14b), desquelles respectivement deux sections cuvette (14a, 14b) dotées de courbes de bord (15a, 15b) et de courbes de contour (16a, 16b) respectivement différentes l'une de l'autre forment une demi-cuvette et les demi-cuvettes d'un élément cuvette (13) concerné sont agencées en symétrie miroir l'une par rapport à l'autre.

8. Structure de construction légère selon l'une quelconque des revendications précédentes, **caractérisée en ce que** les éléments cuvette (13) présentent respectivement une épaisseur de paroi non constante ou constante dépendant de la charge.

9. Structure de construction légère selon l'une quelconque des revendications précédentes, **caractérisée en ce que** les éléments cuvette (13) présentent respectivement une percée (22) en particulier centrée.

10. Structure de construction légère selon l'une quelconque des revendications précédentes, **caractérisée en ce que** plusieurs unités de structure (12) sont reliées en un groupe d'unités de structure.

11. Structure de construction légère selon la revendication 10, **caractérisée en ce que** le groupe d'unités de structure présente au moins une surface de couverture plane avec motif à trous.

12. Utilisation d'une structure de construction légère selon l'une quelconque des revendications 1 à 13 en tant que structure porteuse dans une ossature porteuse plane ou spatiale.
